(19) Europäisches Patentamt

European Patent Office

Office européen des brevets

(11) Veröffentlichungsnummer: **0 160 811 B1**

(12) **EUROPÄISCHE PATENTSCHRIFT**

(45) Veröffentlichungstag der Patentschrift: **29.05.91**

(51) Int. Cl.⁵: **G01D 5/38**

(21) Anmeldenummer: **85102988.4**

(22) Anmeldetag: **15.03.85**

(54) Photoelektrische Messeinrichtung.

(30) Priorität: **08.05.84 DE 3416864**

(43) Veröffentlichungstag der Anmeldung:
**13.11.85 Patentblatt 85/46**

(45) Bekanntmachung des Hinweises auf die
Patenterteilung:
**29.05.91 Patentblatt 91/22**

(84) Benannte Vertragsstaaten:
**AT CH DE FR GB IT LI NL SE**

(56) Entgegenhaltungen:
**DE-A- 1 814 785      DE-A- 2 316 248**
**DE-A- 2 405 341      GB-A- 971 504**
**US-A- 3 482 107      US-A- 3 812 352**

(73) Patentinhaber: **Dr. Johannes Heidenhain
GmbH
Dr.-Johannes-Heidenhain-Strasse 5 Postfach
1260
W-8225 Traunreut(DE)**

(72) Erfinder: **Michel, Dieter, Dipl.-Ing.
Langauenstrasse 12
W-8220 Traunstein(DE)**

## Beschreibung

Die Erfindung bezieht sich auf eine Vorrichtung gemäß dem Oberbegriff des Anspruches 1.

Derartige Vorrichtungen sind bei inkrementalen Längen- oder Winkelmeßeinrichtungen üblich, damit beispielsweise ein für die Meßeinrichtung definierter Nullpunkt festgelegt und reproduziert werden kann.

In der DE-OS 18 14 785 ist der Aufbau einer Referenzmarke zur Erzeugung eines Referenzimpulses beschrieben.

Ein genügend exakter Referenzimpuls läßt sich jedoch nur von einer derartigen Referenzmarke ableiten, wenn der Abtastabstand sehr klein ist und dementsprechend engen Toleranzen hinsichtlich der Abstandsschwankungen unterliegt.

Bei der photoelektrischen Abtastung bisher bekannter Referenzmarken erhält man Eintaktsignale. Um die zur sicheren Auswertung erforderlichen Gegentakt-bzw. Pseudogegentaktsignale zu erhalten, müssen zwei Referenzmarken bzw. eine Referenzmarke und ein Feld (z.B. Spiegel) zum Erzeugen eines Bezugssignales vorgesehen und abgetastet werden. Durch ungleichmäßige Verschmutzung der Referenzmarken und durch Abstandsänderungen beim Abtasten kann sich das erzeugte photoelektrische Signal so verändern, daß eine sichere Auswertung nicht mehr gegeben ist.

Ferner besitzen die bekannten Referenzmarken innerhalb ihres Teilungsfeldes keine Codiermöglichkeit, um sie voneinander unterscheidbar zu machen.

Aus der DE-OS 23 16 248 ist ferner ein photoelektrischer Schrittgeber bekannt, der mit Phasengittern arbeitet, wodurch ein größerer Abtastabstand der beiden zueinander verschiebbaren Gitter zulässig ist, und die Empfindlichkeit gegenüber Abstandsänderungen geringer wird. In dieser Druckschrift wird jedoch kein Hinweis darauf gegeben, wie beispielsweise eine Referenzmarke genügend sicher abgetastet und ausgewertet werden kann.

Aus der US-A-3 482 107 ist eine gattungsgemäße Vorrichtung bekannt, bei der die gebeugten Teilstrahlenbündel auf unterschiedliche photoelektrische Empfänge auftreffen.

Der Erfindung liegt die Aufgabe zugrunde, eine Vorrichtung der eingangs genannten Art zu schaffen, bei der die Toleranzen der Schwankungen des Abtastabstandes vergrößert werden können, bei der ein verhältnismäßig großer Abtastabstand zulässig ist, und bei der anhand von Referenzmarken Referenzimpulse erzeugt und ggf. codiert werden können. Diese Aufgabe wird mit einer Vorrichtung gelöst, die die kennzeichnenden Merkmale des Anspruches 1 aufweist.

Die Vorteile der erfindungsgemäßen Vorrichtung liegen darin, daß auch bei der Abtastung von Referenzmarken ein verhältnismäßig großer Abtastabstand zulässig ist, der dementsprechend gegenüber Änderungen relativ unempfindlich ist. Ferner ist es bei dieser Vorrichtung möglich, die einzelnen Referenzmarken zu codieren, so daß sie unterscheidbar und auswählbar werden.

Vorteilhafte Ausgestaltungen entnimmt man den Unteransprüchen.

Mit Hilfe von Ausführungsbeispielen soll anhand der Zeichnungen die Erfindung noch näher erläutert werden, wobei die Darstellungen zum besseren Verständnis stark vereinfacht wurden.

Es zeigen

Figur 1      eine Meßeinrichtung nach dem Auflichtverfahren arbeitend,

Figur 2      eine Teilansicht einer Abtastplatte entlang der Linie II/II nach Figur 1,

Figur 3      eine Teilansicht eines Phasengitters entlang der Linie III/III nach Figur 1.

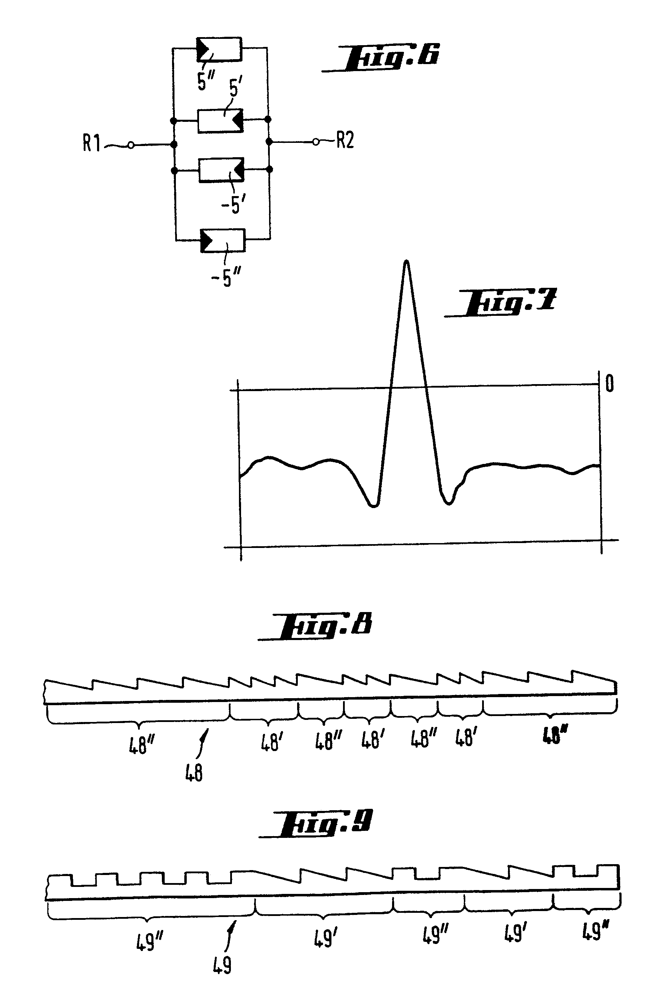

Figur 4      eine Ansicht auf eine Platte mit Photodetektoren entlang der Linie IV/IV nach Figur 1,

Figur 5      eine Meßeinrichtung nach dem Durchlichtprinzip arbeitend,

Figur 6      ein Schaltbild von Photodetektoren,

Figur 7      einen typischen Signalverlauf eines Referenzmarken-Gegentaktsignals,

Figur 8      Querschnitt eines Echelette-Phasengitters mit unterschiedlicher Gitterkonstante und

Figur 9      Querschnitt einer Kombination eines Rechteck-Phasengitters mit einem Echelette-Phasengitter.

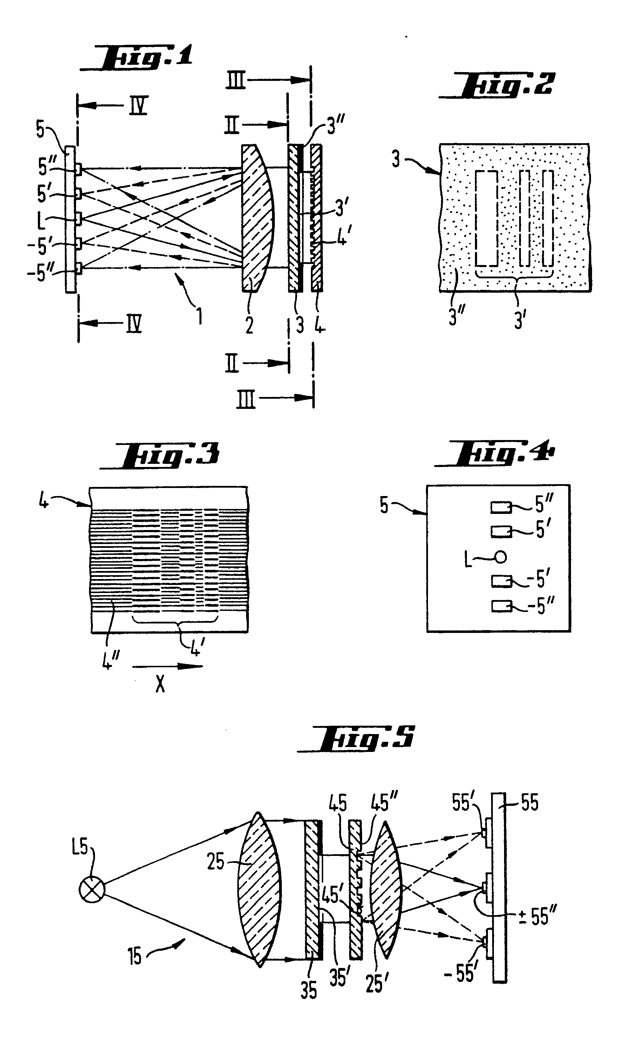

In Figur 1 ist schematisch eine im Auflichtverfahren arbeitende Meßeinrichtung 1 dargestellt. Die Strahlung einer Lichtquelle L wird durch einen Kondensor 2 auf eine Abtastplatte 3 geworfen. Wie aus Figur 2 ersichtlich ist, weist die Abtastplatte 3 ein Teilungsfeld 3' auf, das aus einer Gruppe transparenter Bereiche besteht. Das Umfeld 3'' des Teilungsfeldes 3' ist absorbierend. Das Teilungsfeld 3' zeigt eine Referenzmarke, kann aber auch als periodische Teilung (Inkremental-Maßstab) ausgebildet sein. Eine derartige Ausgestaltung ist besonders sinnvoll, wenn bei herkömmlichen (Auflicht- oder Durchlicht-Amplitudengittern) Maßstäben die sogenannte Einfeld-Gegentaktabtastung durchgeführt werden soll, um qualitativ höherwertige Signale zu erzeugen.

Die durch die Abtastplatte 3 hindurchtretende Strahlung trifft auf ein reflektierendes Auflicht-Phasengitter 4, an dem sie reflektiert und gebeugt wird. Die am Auflicht-Phasengitter 4 gebeugte Strahlung wird durch die Abtastplatte 3 und den Kondensor 2 zurückgeworfen und trifft auf eine Platte 5, auf der Photodetektoren 5', -5'; 5'', -5'' angeordnet sind.

Aus Figur 3 ist ersichtlich, daß das Auflicht-Phasengitter 4 ein Teilungsfeld 4' aufweist, das dem Teilungsfeld 3' der Abtastplatte 3 gleicht. Das Teilungsfeld 4' ist als Phasengitter mit einer Gitterkonstanten von 10 μm ausgeführt. Das Umfeld 4" des Teilungsfeldes 4' ist ebenfalls als Phasengitter ausgeführt, weist aber eine Gitterkonstante von nur 4 μm auf. Die unterschiedlichen Gitterkonstanten der Phasengitter von Teilungsfeld 4' und Umfeld 4" führen zu unterschiedlichen Beugungen, was unterschiedliche Beugungsbilder auf der Platte 5 mit den Photodetektoren 5', -5'; 5", -5" zur Folge hat. Die Furchen und Stufen der Phasengitter verlaufen in Meßrichtung X, was auch aus Figur 3 ersichtlich ist.

Gemäß der Darstellung in Figur 1 verläuft die Meßrichtung X demnach senkrecht zur Zeichnungsebene.

Die Strahlung wird nun entsprechend dem Überdeckungsgradder Teilungsfelder 3' und 4' der Abtastplatte 3 und des Phasengitters 4 in Richtung der positiven und negativen Beugungsordnungen - von denen hier nur die erste betrachtet werden soll - reflektiert und vom Kondensor 2 fokussiert. In der Brennebene des Kondensors 2 entstehen symmetrisch zur Lichtquelle L Beugungsbilder erster Ordnung. In der Brennebene des Kondensors 2 ist die Platte 5 angeordnet, deren Photodetektoren 5', -5'; 5", -5" so plaziert sind, daß die Beugungsbilder erster Ordnung des jeweiligen Phasengitters 4', 4" genau darauf treffen.

Abgesehen von der Wellenlänge λ des verwendeten Lichtes kann die Lage der Beugungsbilder gezielt verändert werden, indem man die Phasengitter entsprechend ausgestaltet, was später anhand weiterer Ausführungsbeispiele noch näher erläutert werden wird.

In Figur 5 ist schematisch gezeigt, daß die Erfindung bei entsprechender Ausgestaltung auch für Meßeinrichtungen 15 geeignet ist, die im Durchlichtverfahren arbeiten.

Die Strahlung einer Lichtquelle L5 wird durch einen Kondensor 25 auf eine Abtastplatte 35 gerichtet, die ein Teilungsfeld 35' aufweist. Einem weiteren Teilungsfeld 45' ist ein Phasengitter 45 überlagert Durch eine Abbildungsoptik 25' werden die Beugungsbilder der Lichtquelle L5 in einer Ebene fokussiert, in der lagerichtig Photodetektoren 55', - 55'; 55", -55" auf einer Platte 55 angeordnet sind.

Wenn abweichend von der Darstellung gemäß Figur 3 nur dem Teilungsfeld 45' und nicht dem Umfeld 45" - oder umgekehrt - ein Phasengitter 45 zugeordnet wird, können Photodetektoren entfallen, da weniger Beugungsbilder entstehen. Diese Maßnahmen sind ins Belieben des Fachmannes gestellt und verlassen nicht den durch die Erfindung gesteckten Rahmen.

Die Photodetektoren 5', -5' und 5", -5" sind paarweise und zueinander antiparallel zusammengeschaltet, so daß sich das Schaltbild gemäß Figur 6 ergibt. Die Auswertung der durch die Photodetektoren erzeugten elektrischen Signale erfolgt durch Abgriff an Punkten R1 und R2, wie in Figur 6 dargestellt ist.

Ein typischer Signalverlauf eines Referenzmarken-Gegentaktsignales nach der Erfindung wird in Figur 7 dargestellt. Dieses an den Punkten R1 und R2 der Schaltung gemäß Figur 6 anstehende Signal läßt sich sicher auswerten, da ein ausreichendes Nutz-Störsignalverhältnis besteht, denn bei Änderung des Abstandes und Verschmutzung verändert sich das Signal im wesentlichen symmetrisch zur Nullinie (Amplitude).

Die bereits erwähnten Möglichkeiten der Codierung der Referenzmarken bestehen darin, die Phasengitter unterschiedlich auszubilden.

Bereits aus der Ausbildung der Phasengitter 4' und 4" gemäß Figur 3 ist ersichtlich, daß die zugehörigen Beugungsbilder an verschiedenen Orten auf ihre zugehörigen Photodetektoren ± 5' und ± 5" treffen. Bei der gezeigten parallelen Ausrichtung der Phasengitter 4' und 4" kann also durch den jeweiligen, ein Signal liefernden Photodetektor ± 5' oder ± 5" eindeutig bestimmt werden, zu welchem Phasengitter 4' oder 4" das den jeweiligen Photodetektor ± 5 oder ± 5" beaufschlagende Beugungsbild gehört.

Die Variante des in Figur 3 gezeigten Phasengitters ist die der Rechteckprofil-Phasengitter mit unterschiedlicher Gitterkonstante für das Teilungsfeld 4' und das Umfeld 4", jedoch mit gleicher (paralleler) Ausrichtung.

In Figur 8 wird im Querschnitt eine Variante mit Echelette-Phasengitter gezeigt, bei der das Teilungsfeld 48' und das Umfeld 48" unterschiedliche Gitterkonstanten und/oder Ausrichtung aufweisen. Die Beugungsbilder der Beleuchtung werden der Variation entsprechend abgelenkt, und die den einzelnen Beugungsbildern zugeordneten Photodetektoren entsprechend plaziert. Dadurch können die einzelnen Referenzmarken codiert und durch Abgriff der entsprechenden Photodetektoren unterschieden werden.

Ferner sind gemäß Figur 9 Kombinationen von Rechteck-Phasengittern mit Echelette-Phasengittern gleicher oder unterschiedlicher Gitterkonstanten für Teilungsfeld und Umfeld möglich, wobei auch hier noch die Ausrichtung der Phasengitter unterschiedlich gemacht werden kann.

Die Ausgestaltung der Phasengitter wird der Fachmann den Einsatzbedingungen entsprechend auswählen und kombinieren. Besondere Bedeutung kommt dabei der gegenseitigen Ausrichtung der Phasengitter zu, da durch unterschiedliche Ausrichtung der Phasengitter und entsprechende Plazierung der zugehörigen Photodetektoren die Codierung der einzelnen Referenzmarken besonders einfach ist.

Die Plazierung der zu den jeweiligen Beugungsbildern gehörigen Photodetektoren ergibt sich aus den Zusammenhängen der Gittertheorie, die ausführlich in der 1978 veröffentlichten Dissertation von J. Wilhelm "Dreigitterschrittgeber - photoelektrische Aufnehmer zur Messung von Lageänderungen" (TU Hannover) abgehandelt wird. Nach Seite 12 dieser Druckschrift lautet die Beugungsformel

$$\sin \alpha = \frac{k \cdot \lambda}{d}$$

wobei k die Ordnungszahl, $\lambda$ die Wellenlänge und d die Gitterkonstante ist.

## Ansprüche

1. Vorrichtung zur photoelektrischen Erzeugung von elektrischen Signalen bei Lagemeßeinrichtungen, insbesondere von Referenzimpulsen anhand von Referenzmarken bei Längen- oder Winkelmeßeinrichtungen, mit wenigstens einer Beleuchtungseinrichtung, Abtastplatte, wenigstens einem Längen-oder Winkelteilungsfeld mit Teilungsmarkierungen auf einem Teilungsträger, wenigstens einem Photodetektor und einer dazugehörige Auswerteschaltung, wobei die Abtastplatte zwischen der Beleuchtungseinrichtung und den Teilungsträger angeordnet ist, wobei die Abtastplatte zumindest ein Teilungsfeld aufweist, das von einem absorbierenden Umfeld umgeben ist, wobei zumindest die einzelnen Teilungsmarkierungen (4', 45', 48', 49') als Phasengitter (4, 45, 48, 49) ausgebildet sind, wobei die beleuchtete Fläche mindestens eines Phasengitters sich bei der Relativbewegung von Abtastplatte und Teilungsträger ändert, wobei die Furchen und Stufen der Teilungsmarkierungen (4', 45', 48', 49') in einem Winkel zur Meßrichtung verlaufen, der von Neunzig-Grad abweicht, und wobei zum Erfassen der von den Phasengittern (4, 45, 48, 49) gebeugten Strahlung Detektoren (5' bis -55") vorgesehen sind, deren Anordnung von der Wellenlänge der Strahlung, der Orientierung und den Gitterparametern der Phasengitter (4, 45, 48, 49) abhängt.

2. Vorrichtung nach Anspruch 1, dadurch gekennzeichnet, daß zusätzlich zu einer als Referenzmarkenfeld (4') ausgebildeten Teilungsmarkierung auch das Umfeld (4") als Phasengitter mit vom Referenzmarkenfeld (4') verschiedenen Gitterparametern ausgebildet ist.

3. Vorrichtung nach den Ansprüchen 1 und 2, dadurch gekennzeichnet, daß die Phasengitter (4', 4") als Rechteckprofilphasengitter mit unterschiedlicher Gitterkonstante, aber gleicher Orientierung ausgebildet sind.

4. Vorrichtung nach den Ansprüchen 1 und 2, dadurch gekennzeichnet, daß die Phasengitter als Echelettephasengitter (48', 48") mit unterschiedlicher Gitterkonstante, aber gleicher Orientierung ausgebildet sind.

5. Vorrichtung nach Anspruch 1, dadurch gekennzeichnet, daß die Phasengitter (49', 49") aus Rechteckprofilphasengittern (49") und Echelettephasengittern (49') kombiniert sind.

6. Vorrichtung nach Anspruch 1, dadurch gekennzeichnet, daß die Orientierung der Phasengitter (4, 45, 48, 49) unterschiedlich ist.

7. Vorrichtung nach Anspruch 1, dadurch gekennzeichnet, daß die Phasengitter (4, 45, 48, 49) als Auflicht- und /oder Durchlichtgitter ausgeführt sind.

## Claims

1. Arrangement for the photoelectric generation of electrical signals in position measuring devices, especially of reference pulses in accordance with reference marks in length or angle measuring devices, with at least one illuminating device, sensing plate, at least one length or angle graduation field with graduation markings on a graduation support, at least one photodetector and an associated processing circuit, wherein the sensing plate is arranged between the illuminating device and the graduation support, wherein the sensing plate has at least one sensing field, which is surrounded by an absorbing ground, wherein at least the individual graduation markings (4', 45', 48', 49') are formed as phase gratings (4, 45, 48, 49), wherein the illuminated surface of at least one phase grating changes with the relative movement of sensing plate and graduation support, wherein the ridges and steps of the graduation markings (4', 45', 48', 49') run at an angle to the measuring direction, which is different from ninety degrees, and wherein there are provided for detecting the radiation diffracted by the phase gratings (4, 45, 48, 49) detectors (5' to -55") whose arrangement depends on the wavelength of the radiation, the orientation and the grating parameters of the phase gratings (4, 45, 48, 49).

2. Arrangement according to claim 1, characterized in that, in addition to a graduation marking formed as a reference marking field (4'), the ground (4") is also formed as a phase grating with grating parameters different from the reference marking field (4').

3. Arrangement according to claims 1 and 2, characterized in that the phase gratings (4', 4") are formed as rectangularly profiled phase gratings with different grating constants but the same orientation.

4. Arrangement according to claims 1 and 2, characterized in that the phase gratings are formed as echelette phase gratings (48', 48") with different grating constants but the same orientation.

5. Arrangement according to claim 1, characterized in that the phase gratings (49', 49") are combined from rectangularly profiled phase gratings (49") and echelette phase gratings (49').

6. Arrangement according to claim 1, characterized in that the orientation of the phase gratings (4, 45, 48, 49) is different.

7. Arrangement according to claim 1, characterized in that the phase gratings (4, 45, 48, 49) are implemented as incident light and/or transmitted light gratings.

## Revendications

1. Dispositif de production par voie photo-électrique de signaux électriques dans des dispositifs de mesure de position, notamment d'impulsions de référence à partir de repères de référence dans des dispositifs de mesure de longueurs ou d'angles, comportant au moins un dispositif d'éclairage, une plaque de lecture, au moins une zone de graduation de longueurs ou d'angles avec un support de graduation muni de repères de graduation, au moins une cellule photo-électrique et un circuit d'évaluation associé, la plaque de lecture étant disposée entre le dispositif d'éclairage et le support de graduation, la plaque de lecture présentant au moins une zone de graduation entourée d'un champ absorbant, au moins les différents repères de graduation (4', 45', 48', 49') formant un réseau de phase (4, 45, 48, 49), la surface éclairée d'au moins un réseau de phase changeant lors du déplacement relatif de la plaque de lecture et du support de graduation, les sillons et les gradins des repères de graduation (4', 45', 48', 49') formant un angle différent de 90° avec la direction de mesure, des capteurs (5' à 55") étant prévus pour l'enregistrement du rayonnement diffracté par les réseaux de phase (4, 45, 48, 49), capteurs dont la position dépend de la longueur d'onde du rayonnement, de l'orientation et des caractéristiques de réseau des réseaux de phase (4, 45, 48, 49).

2. Dispositif selon la revendication 1, *caractérisé* en ce que, en plus des repères de graduation formant une zone de repères de référence (4'), la zone périphérique (4") est formée en réseau de phase avec des caractéristiques de réseau différentes de celles de la zone de repères (4') de référence.

3. Dispositif selon les revendications 1 et 2, *caractérisé* en ce que les réseaux de phase (4', 4") sont réalisés sous la forme de réseaux de phase à profil carré avec des constantes de réseau différentes, mais de même orientation.

4. Dispositif les réseaux de phase sont réalisés sous forme de réseaux de phase échelles (48', 48") avec des constantes de réseau différentes, mais de même orientation.

5. Dispositif selon la revendication 1, *caractérisé* en ce que les réseaux de phase (49', 49") sont une combinaison de réseaux de phase à profil carré (49") et de réseaux de phase échelles (49').

6. Dispositif selon la revendication 1, *caractérisé* . en ce que l'orientation des réseaux de phase (4, 45, 48, 49) est différente.

7. Dispositif selon la revendication 1, *caractérisé* en ce que les réseaux de phase (4, 45, 48, 49) sont réalisés sous forme de réseaux à lumière réfléchie et/ou à lumière transmise.

Fig.1

Fig.2

Fig.3

Fig.4

Fig.5

*Fig.6*

*Fig.7*

*Fig.8*

*Fig.9*